# EUROPÄISCHE PATENTANMELDUNG

(11) **EP 2 030 714 A1**
(43) Veröffentlichungstag der Anmeldung: **04.03.2009**
(21) Anmeldenummer: 08015087.3
(22) Anmeldetag: 27.08.2008
(51) Int. Cl.: B23D 61/02

(54) **Sägeblatt**

(30) Priorität: 01.09.2007 DE 202007012295 U
(71) Anmelder: Edessö-Werk Ed. Engels Söhne GmbH & Co. KG, 42855 Remscheid (DE)
(72) Erfinder: Nöll, Marcus, 42857 Remscheid (DE)
(74) Vertreter: Leinung, Günter

(57) **Zusammenfassung**

Die Erfindung betrifft ein Sägeblatt, insbesondere ein Kreissägeblatt, dessen Umfangsrand als Schneide ausgebildet oder mit Schneidelementen bestückt ist, eine zentrische Öffnung besitzt und im Scheibenkörper Durchgangslöcher vorgesehen sind, für das Schneiden und Trennen von Materialien z. B. von Holz, Metallen, Natursteinen sowie Produkten aus Beton und Glas.

Gemäß der Erfindung sind im Scheibenkörper 2 vom Sägeblatt 1 in kreisrunder Anordnung Lochgruppen-Konfigurationen 7, ausgebildet durch kleine und große Durchgangslöcher 8; 9, vorgesehen und die Randzone 5 vom Sägeblatt 1 ist mit Schlitzen 4 ausgebildet.

## Beschreibung

Die Erfindung betrifft ein Sägeblatt, insbesondere ein Kreissägeblatt, dessen Umfangsrand als Schneide ausgebildet oder mit Schneidelementen bestückt ist, eine zentrische Öffnung besitzt und im Scheibenkörper Durchgangslöcher vorgesehen sind, für das Schneiden und Trennen von Materialien z. B. von Holz, Metallen, Natursteinen sowie Produkten aus Beton und Glas.

Aus dem Stand der Technik ist seine Vielzahl von Sägeblättern bekannt, welche an ihrem äußeren Umfang mit Schneidelementen bestückt sind und in ihren Flächenteilen Durchtrittsöffnungen besitzen. Diese Durchtrittsöffnungen sollen erreichen, dass Verformungen des Schnittwerkzeuges beim bestimmungsgemäßen Einsatz, hervorgerufen durch mechanische Beanspruchungen und durch Erwärmungen, gemindert werden sollen.

So wird mit der DE 198 22 742 A1 ein kreisscheibenförmiges Werkzeug vorgestellt, welches mit einer peripheren Schneidelemente aufweisenden Kranzzone und einem zentralen Spannloch ausgebildet ist, bei dem durch Trennschlitze begrenzende Stoß dämpfende Speichenstege in der periphemahen Ringzone des Werkzeuges vorgesehen sind. Diese Speichenstege sind zum Radius des Kreissägeblattes derart geneigt angeordnet, dass sie bei vorgegebener Drehrichtung des Kreissägeblattes in die nacheilende Richtung geneigt sind, so dass der Wurzelbereich eines Speichensteges zu seinem peripheren Endbereich in Drehrichtung voreilend angeordnet ist.
Diese vorgeschlagenen Mittel, welche zum Abbau stoßartiger Belastungen vorgesehen sind, sind nur begrenzt geeignet, die in einem Kreissägeblatt auftretenden stoßhaften Belastungen abzubauen.

Eine weitere Lösung ist mit der EP 0 836 903 B1 bekannt geworden, die sich auf eine Diamantscheibe zum Schneiden von Granit, Marmor, Stahlbeton und Gesteinsmaterialien bezieht, welche eine Vielzahl von Durchgangslöchern im Scheibenkörperbereich besitzt, um ein Verteilen der während der Schneidvorgänge erzeugten Wärme zu bewirken.

Die vorgesehenen Durchgangslöcher in der Diamantscheibe sind gleichmäßig oder ungleichmäßig verteilt angeordnet, welche jedoch nur dem Zweck dienen, die beim Einsatz des Schneidwerkzeuges auftretende Wärme abzuleiten.

Die Probleme, die beim Trennen von Materialien der eingangs beschriebenen Art auftreten, sind sehr vielgestaltig. Dies betrifft die mechanische Beanspruchung des jeweils zum Einsatz kommenden Schneidwerkzeuges, dessen Erwärmung und das Auftreten von Schwingungen innerhalb des Schneidwerkzeuges, die in der Gesamtheit negativ auf die Schneidvorgänge, aber insbesondere auf die Standfestigkeit der Schneidwerkzeuge wirken.

Unter Beachtung dieser Sachverhalte stellt sich vorliegende Erfindung die Aufgabe, ein Sägeblatt, insbesondere ein Kreissägeblatt, mit am Umfangsrand ausgebildeter Schneide bzw. dort eingesetzter Schneidelemente derart weiterzubilden, welches in seiner Gesamtheit an der Kraftübertragung beteiligt ist, eine gleichmäßige Spannungsverteilung im Sägeblatt erreicht wird und die Nachteile des bekannten Standes der Technik weitestgehend ausgeschlossen werden.

Gemäß der Erfmdung wird diese Aufgabe mit den Merkmalen des Anspruchs 1 gelöst.

In den Unteransprüchen sind besondere Ausführungen und vorteilhafte Lösungen angegeben.

Bei der Lösung dieser Aufgabe geht die Erfmdung von der Erkenntnis aus, dass in Sägeblättern, in Kreissägeblättern, sich Spannungskonzentrationsgebiete herausbilden, die an unterschiedlichen Stellen im Sägeblatt konzentriert sind, die sich fortlaufend im rotierenden Sägeblatt verschieben und so ein dynamisch wirkendes Spannungssystem bilden.
Dies begründet damit, dass auf Grund der jeweils herrschenden Betriebsbedingungen während der Schneid- bzw. Trennungsvorgänge diese keine gleichförmig verteilten Belastungen auf bzw. in dem Sägeblatt hervorrufen, somit sich Spannungskonzentrationen im Kreissägeblatt herausbilden bzw. konzentriert werden, welche sich ungleichförmig, somit nicht symmetrisch, in dem Scheibenkörper des Sägeblattes konzentrieren und im weitesten Sinne Spannungsnester bilden.

Zur Verteilung bzw. Auflösung dieser Spannungsnester wurde ein erfindungsgemäßes Sägeblatt derart weiterentwickelt, welches unter Berücksichtigung des Kraftverlaufes während des Betriebszustandes die Spannungskonzentrationen auflöst. Dies wird durch die Ausbildung und Anordnung von im Scheibenkörper des Sägeblattes vorgesehenen Lochgruppen-Konfigurationen erreicht, welche in bestimmter flächenhafter Anordnung im Scheibenkörper des Sägeblattes vorgesehen sind.

Die Ausbildung der Lochgruppen-Konfigurationen und deren Anordnung im Scheibenkörper des Sägeblattes erfolgt unter Berücksichtigung des Schnittverlaufes des Sägeblattes während des Betriebszustandes, der Belastung im Sägeblatt, der Kenngrößen des jeweiligen Antriebes sowie der werkstoffmäßigen Ausbildung des Sägeblattes.

Unter Nutzung der COA-Methode (CAO = Computer Assisted Optimization) werden nach dem Vorbild des natürlichen Wachstumsprozesses biologischer Gewebe mit diesem Verfahren lokale Spannungsspitzen sowie Spannungskonzentrationsgebiete in Schnittwerkzeugen erfasst, minimiert und weitestgehend beseitigt, indem die Oberflächenstrukturen des geschaffenen Sägeblattes so gestaltet werden, dass eine Spannungsverteilung innerhalb des Sägeblattes erreicht wird, somit vorhandene Spannungskonzentrationsgebiete aufgelöst werden. Dadurch werden kritische Bereiche durch die optimale Verteilung der Masse aufgelöst. Dies bedeutet aus mechanischer Sicht, dass sich die Zunahme von Lasten/Belastungen auf ein Bauteil stets an einen dynamischen Gesamtbelastungszyklus orientiert, die aufgelöst/beseitigt werden sollen, was gemäß der vorliegenden Erfmdung durch die Ausbildung und Anordnung der Lochgruppen-Konfigurationen im Sägeblatt erreicht wird.

Die erfindungsgemäßen Lochgruppen-Konfigurationen in dem Scheibenkörper des Sägeblattes sind nach der oben beschriebenen Methode angeordnet und bestehen aus einer Anzahl kleiner und großer Durchgangslöcher, bei denen die kleinen Durchgangslöcher in bogenförmiger Anordnung in dem Scheibenkörper vorgesehen sind und hinter diesen kleinen Durchgangslöcher mittig zu diesen ein größeres Durchgangsloch vorgesehen ist. Die kleinen Durchgangslöcher sind nebeneinander aufgereiht und ihre bogenförmige Anordnung weist in Richtung des Drehsinnes des Sägeblattes.

Die kleinen Durchgangslöcher und auch das jeweils zugeordnete größere Durchgangsloch sind kreisrund ausgebildet und in Abhängigkeit der vorherrschenden Beanspruchungen in dem Sägeblatt größenmäßig definiert.

Die Anordnung dieser Lochgruppen-Konfigurationen erfolgt unter Beachtung der auftretenden Beanspruchungen im Sägeblatt und sind so ausgeführt, dass diese Umlaufkreise, vorzugsweise zwei Umlaufkreise, herausbilden, die jeweils durch die Zentren der Lochgruppen-Konfigurationen verlaufen.
Flächenhaft bezogen sind die einzelnen Lochgruppen-Konfigurationen auf dem inneren Umlaufkreis versetzt zu den Lochgruppen-Konfigurationen des äußeren Umlaufkreises, angeordnet, was bedeutet, dass je eine Lochgruppen-Konfiguration des inneren Umlaufkreises zwischen zwei auf dem äußeren Umlaufkreis vorgesehenen Lochgruppen-Konfigurationen angeordnet ist.

Mit dem geschaffenen Sägeblatt wird sichergestellt, dass die Spannungen aus den einzelnen Spannungsnestern, Spannungskonzentrationsgebieten auf das Flächenumfeld im Scheibenkörper des Sägeblattes verteilt werden, wodurch gleichzeitig die Belastungsfähigkeit des Sägeblattes erhöht wird.

In einer bevorzugten Ausführungsform ist das vorgestellte Sägeblatt mit einer an dessen Umfangsrand vorgesehenen Schneide ausgeführt, welche unmittelbar im bzw. am Umfangsrand ausgebildet ist oder in einer weiteren bevorzugten Ausführungsvariante sind Schneidelemente auf dem Umfangsrand des Sägeblattes angeordnet, welche beispielsweise als Diamantschneidelemente ausgebildet sind.

Eine weitere vorteilhafte Weiterbildung der Erfindung sieht vor, dass die Durchgangslöcher der Lochgruppen-Konfigurationen mit unterschiedlichen Querschnittsformen ausgebildet sind. So können diese neben der kreisrunden Ausbildung einer Dreieckform eine von der Dreieckform abgewandelte Querschnittsform besitzen, aber auch mit einer polygonen, ovalen oder ähnlichen Querschnittsform ausgebildet sein.

Mit nachfolgendem Ausführungsbeispiel soll die Erfindung näher erläutert werden. Die dazugehörige Zeichnung zeigt die Draufsicht eines Sägeblattes.

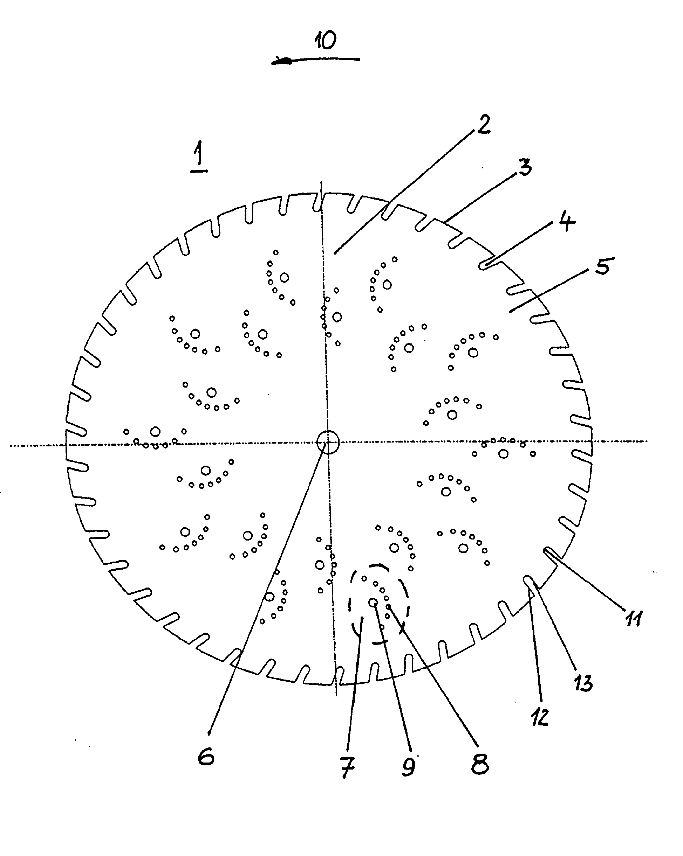

Aus der Draufsichtdarstellung der Zeichnung ergibt sich die Ausbildung des Sägeblattes 1 in seiner Gesamtheit, in dessen Scheibenkörper 2 die erfindungsgemäßen Lochgruppen-Konfigurationen 7 vorgesehen sind, die aus einer Vielzahl kleiner Durchgangslöcher 8 und einem dazugeordneten größeren Durchgangsloch 9 gebildet sind.

Im Bereich des Umfangsrandes 3 des Sägeblattes 1 ist dessen Schneide vorgesehen, welche durch in die Randzone 5 des Sägeblattes 1 eingearbeitete Schlitze 4 unterteilt ist. Dabei kann die Schneide des Sägeblattes 1 unmittelbar im bzw. am Umfangsrand 3 ausgebildet sein oder alternativ dazu sind am Umfangsrand 3 des Sägeblattes 1 einzelne Schneidelemente angeordnet.
Die Schlitze 4 sind unter einem bestimmten Winkel ausgebildet, dies in der Form, dass die Schlitze 4 in ihrer Verlängerung weitestgehend tangential zum Zentrum des Sägeblattes 1 verlaufen.

Wie aus der beigefügten Zeichnung ferner ersichtlich, ist der Schlitzgrund 11 mit einer Rundung ausgebildet und die Schlitzseiten 12, 13 sind an ihren Kanten verrundet.

Zentrisch besitzt das Sägeblatt 1 ein Spannloch 6, über das das Sägeblatt 1 auf der Antriebswelle einer Bearbeitungsmaschine aufgesetzt und befestigt werden kann.

Wie sich aus der beigefügten Zeichnung auch ergibt, sind die einzelnen Lochgruppen-Konfigurationen 7 so im Sägeblatt 1 vorgesehen, dass deren Anordnung einen äußeren und einen inneren Umlaufkreis bilden, somit die einzelnen Lochgruppen-Konfigurationen 7 kreisförmig umlaufen.
Gezeigt wird auch, dass die Lochgruppen-Konfigurationen 7 des inneren Umlaufkreises jeweils in den Zwischenraum von zwei auf dem äußeren Umlaufkreis vorgesehenen Lochgruppen-Konfigurationen 7 eingreifen und sich beim Umlauf des Sägeblattes 1 im weitesten Sinne die inneren nach innen gerichteten kleinen Durchgangslöcher 8 des äußeren Umlaufkreises mit den äußeren nach außen gerichteten kleinen Durchgangslöchern 8 des inneren Umlaufkreises überschneiden und so die Lochgruppen-Konfigurationen 7 in ihrer Gesamtheit die positiven Wirkungen des Sägeblattes 1 begründen.

Mittig und im weitesten Sinne hinter den kleinen Durchgangslöchern 8 sind die großen Durchgangslöcher 9 der Lochgruppen-Konfigurationen 7 vorgesehen, welche neben ihrer Einzelausbildung und Anordnung auch aus mehreren Durchgangslöchern 9 bestehen können und somit die Ausbildung und Anordnung der Durchgangslöcher 9 nicht auf die dargestellte und beschriebene Ausführung begrenzt sind.

Wie auch gezeigt, sind die kleinen Durchgangslöcher 8 untereinander auf einem gleichen Kreisbogen angeordnet, dies in der Art, dass die einzelnen kleinen Durchgangslöcher 8 bogenförmig angeordnet sind und die bogenförmige Anordnung in Richtung des Drehsinnes 10 vom Sägeblattes 1 weisen.

## Patentansprüche

1. Sägeblatt, ausgebildet als ein Kreissägeblatt, mit am Umfangsrand vom Scheibenkörper vorgesehener Schneide bzw. Schneidelementen, wobei der Scheibenkörper mit Durchgangslöchern ausgebildet ist, **dadurch gekennzeichnet, dass**
im Scheibenkörper (2) vom Sägeblatt (1) in kreisrunder Anordnung Lochgruppen-Konfigurationen (7), ausgebildet durch kleine und große Durchgangslöcher (8; 9), vorgesehen sind und die Randzone (5) vom Sägeblatt (1) mit Schlitzen (4) ausgebildet ist.

2. Sägeblatt nach Anspruch 1, **dadurch gekennzeichnet, dass**
die Anordnung der Lochgruppen-Konfigurationen (7) im Scheibenkörper (2) in ihrer Gesamtheit Umlaufkreise herausbilden, wobei die kleinen Durchgangslöcher (8) bogenförmig nach außen gewölbt und nebeneinander angeordnet sind und die großen Durchgangslöcher (9) hinter der bogenförmigen Anordnung der kleinen Durchgangslöcher (8) zugeordnet sind.

3. Sägeblatt nach den Ansprüchen 1 und 2, **dadurch gekennzeichnet, dass**
die durch die kleinen Durchgangslöcher (8) gebildeten Bögen mit ihrer Wölbung dem Drehsinn (10) des Sägeblattes (1) folgen.

4. Sägeblatt nach einem der Ansprüche 1 bis 3, **dadurch gekennzeichnet, dass**
die inneren und äußeren Lochgruppen-Konfigurationen (7) so im Scheibenkörper (2) angeordnet sind, dass die kleinen Durchgangslöcher (8) der inneren Lochgruppen-Konfiguration (7) in die Zwischenräume von zwei kleinen Durchgangslöchern (8) der äußeren Lochgruppen-Konfigurationen (7) hineinragen.

5. Sägeblatt nach den Ansprüchen 1 bis 4, **dadurch gekennzeichnet, dass**
die im Scheibenkörper (2) vorgesehenen Schlitze (4) schräg verlaufen und tangential zum Zentrum des Sägeblattes (1) ausgerichtet sind.

6. Sägeblatt nach einem der vorhergehenden Ansprüche, **dadurch gekennzeichnet, dass**
der Schlitzgrund (11) und die Schlitzseiten (12; 13) der Schlitze (4) Kanten verrundet ausgebildet sind.

7. Sägeblatt nach einem der vorhergehenden Ansprüche, **dadurch gekennzeichnet, dass**
der Umfangsrand (3) des Sägeblattes (1) als Schneide ausgebildet ist oder alternativ zum Umfangsrand (3) einzelne Schneidelemente angeordnet sind.
